# EUROPEAN PATENT APPLICATION

(11) **EP 4 438 391 A1**
(43) Date of publication of application: **02.10.2024**
(21) Application number: 22897761.7
(22) Date of filing: 21.11.2022
(51) Int. Cl.: B60L 53/62

(54) **VEHICLE CHARGING CONTROL METHOD AND APPARATUS, DEVICE, AND STORAGE MEDIUM**

(30) Priority: 25.11.2021 CN 202111415861
(71) Applicant: Beijing Co Wheels Technology Co., Ltd, Beijing 101300 (CN)
(72) Inventor: XUE, Jian, Beijing 101300 (CN); MENG, Yue, Beijing 101300 (CN); MA, Chunshan, Beijing 101300 (CN); JI, Zheng, Beijing 101300 (CN); NING, Yunpeng, Beijing 101300 (CN)
(74) Representative: Maiwald GmbH
(86) International application number: PCT/CN2022/133247
(87) International publication number: WO 2023/093678

(57) **Abstract**

Also disclosed are a vehicle charging control apparatus, an electronic device, a computer-readable storage medium, and a vehicle. A vehicle charging control method, comprising: obtaining a proportional relationship between a predicted charging cost and a predicted charging time, and a target charging battery level, the target charging battery level and the proportional relationship being set by a user according to requirements; then, determining specific values of the predicted charging cost and the predicted charging time in the proportional relationship; and according to the target charging battery level, the predicted charging cost, and the predicted charging time, determining an actual control sequence for performing actual charging control on a vehicle, the actual control sequence being used for controlling related components in the vehicle when the vehicle is charged.

## Description

### CROSS-REFERENCE TO RELATED APPLICATIONS

This application is based on and claims priority to Chinese Patent Application No. 202111415861.2, filed on November 25, 2021, the entire content of which is incorporated herein by reference.

### TECHNICAL FIELD

The present disclosure relates to the field of an electric vehicle (EV) charging technologies, in particularly, to a method and an apparatus for vehicle charge control, a device and a storage medium.

### BACKGROUND

An electric vehicle (EV) refers to a vehicle with taking a vehicle power supply as power and with driving wheels using a motor and with meeting requirements of road traffic and safety regulations. A prospect of the EV is widely optimistic due to its small environmental influence relative to a conventional vehicle. The EV is widely promoted due to its non-pollution, low noise, stable operation and other advantages.

At present, a method for charging the EV is to charge the vehicle according to a charging capacity of a charging station and a maximum charging current of the vehicle. A charge control sequence in an entire charging process is relatively fixed, and cannot be adjusted according to user demands, and intelligence degree of charge control is low.

### SUMMARY

In order to solve the above technical problems, a method and an apparatus for vehicle charge control, a device and a storage medium are provided in the disclosure, capable of controlling the vehicle to charge according to user demands and an actual condition of a vehicle, and improving an intelligence degree of vehicle charge control.

In a first aspect, a method for vehicle charge control is provided according to embodiments of the disclosure, and includes:
acquiring a proportional relationship between an estimated charging cost and an estimated charging time and a target charging quantity of electricity;
determining the estimated charging cost and the estimated charging time according to the target charging quantity of electricity and the proportional relationship between the estimated charging cost and the estimated charging time; and
determining an actual control sequence for performing an actual charge control on the vehicle according to the target charging quantity of electricity, the estimated charging cost and the estimated charging time, in which the actual control sequence is a sequence consisting of control signals issued to a component related to charging of the vehicle when the vehicle is charged.

In a second aspect, an apparatus for vehicle charge control is provided according to embodiments of the disclosure, and includes:
a receiving module, configured to acquire a proportional relationship between an estimated charging cost and an estimated charging time and a target charging quantity of electricity;
a first determining module, configured to determine the estimated charging cost and the estimated charging time according to the target charging quantity of electricity and the proportional relationship between the estimated charging cost and the estimated charging time; and
a second determining module, configured to determine an actual control sequence for performing an actual charge control on the vehicle according to the target charging quantity of electricity, the estimated charging cost and the estimated charging time, in which the actual control sequence is a sequence consisting of control signals issued to a component related to charging of the vehicle when the vehicle is charged.

In a third aspect, an electronic device is provided according to embodiments of the present disclosure, and includes:
a memory;
a processor; and
a computer program stored in the memory;
in which the computer program is executed by the processor to implement the above method for vehicle charge control.

In a fourth aspect, a computer-readable storage medium with a computer program stored thereon is provided according to embodiments of the present disclosure. When the computer program is executed by a processor, steps of the method for vehicle charge control are implemented.

In a fifth aspect, a vehicle including the apparatus for vehicle charge control is provided according to embodiments of the disclosure.

In the method for vehicle charge control provided in the disclosure, the target charging quantity of electricity of the vehicle and the proportional relationship between the estimated charging cost and the estimated charging time are acquired, and the target charging quantity of electricity and the proportional relationship may be configured by the user according to demands. Then, specific values of the estimated charging cost and the estimated charging time in the proportional relationship are determined, and the actual control sequence for performing the actual charging control on the vehicle is determined according to the target charging quantity of electricity, the estimated charging cost and the estimated charging time. The actual control sequence is used for controlling relevant components of the vehicle when the vehicle is charged, are. The method provided in the disclosure may control the vehicle to charge according to user demands and an actual condition of the vehicle, which improves an intelligence degree of the vehicle charge control.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.

In order to explain the technical solutions in embodiments of the present disclosure or in the related art more clearly, the drawings described in the embodiments or the related art will be briefly introduced below. Obviously, those skilled in the art may obtain other drawings based on the drawings without any creative work.
FIG. 1 is a structural diagram illustrating a system for vehicle charge according to example embodiments of the present disclosure.
FIG. 2 is a diagram illustrating a charging demand input interface according to example embodiments of the present disclosure.
FIG. 3a is a flowchart illustrating a method for determining charging demand information according to embodiments of the present disclosure.
FIG. 3b is a flowchart illustrating a method for determining charging demand information according to embodiments of the present disclosure.
FIG. 4 is a flowchart illustrating a method for vehicle charge control according to example embodiments of the present disclosure.
FIG. 5 is a structural diagram illustrating a method for determining a vehicle charging cost according to example embodiments of the present disclosure.
FIG. 6 is a structural diagram illustrating an apparatus for determining charging demand information according to example embodiments of the present disclosure.
FIG. 7 is a structural diagram illustrating an apparatus for determining charging demand information according to example embodiments of the present disclosure.
FIG. 8 is a structural diagram illustrating an apparatus for vehicle charge control according to example embodiments of the present disclosure.
FIG. 9 is a structural diagram illustrating an apparatus for determining a vehicle charging cost according to example embodiments of the present disclosure.
FIG. 10 is a diagram illustrating a vehicle according to example embodiments of the present disclosure.
FIG. 11 is a diagram illustrating another electronic device according to example embodiments of the present disclosure.
FIG. 12 is a diagram illustrating another electronic device according to example embodiments of the present disclosure.
FIG. 13 is a diagram illustrating another electronic device according to example embodiments of the present disclosure.

### DETAILED DESCRIPTION

In order to understand the above purpose, features and advantages of the present disclosure more clearly, embodiments of the present disclosure may be further described below. It should be noted that, embodiments of the present disclosure may be combined with features in the embodiments without conflict.

Numerous specific details are set forth in the following description to facilitate a thorough understanding of the present disclosure. However, the present disclosure may also be implemented in other different ways than those described herein; obviously, embodiments in the specification are only a part of embodiments of the present disclosure rather than all embodiments.

With respect to the technical problem, in some embodiments of the disclosure, charging demand information of a vehicle is received; a target charging quantity of electricity of the vehicle and a proportional relationship between an estimated charging cost and an estimated charging time are acquired; the estimated charging cost and the estimated charging time are determined according to the target charging quantity of electricity and the proportional relationship between the estimated charging cost and the estimated charging time; an actual control sequence for performing an actual charging control on the vehicle is determined according to the target charging quantity of electricity, the estimated charging cost and the estimated charging time; and a control sequence that matches the charging demand information is acquired to perform charging control on the vehicle based on the charging demand information of a user, which improves an intelligence degree of vehicle charge control.

The technical solution according to embodiments each of the present disclosure is described in combination with accompanying drawings.

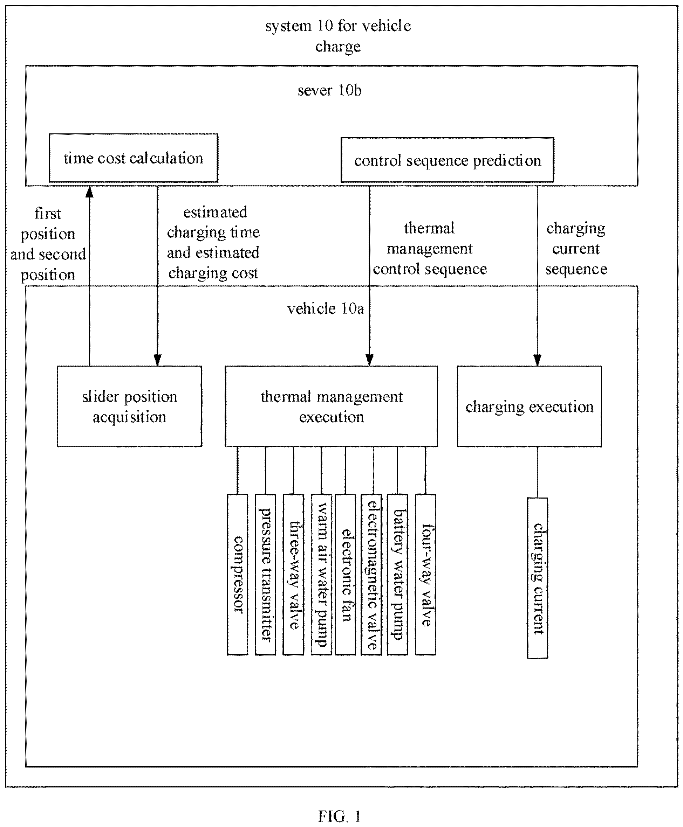

FIG. 1 is a structural diagram illustrating a system 10 for vehicle charge according to example embodiments of the present disclosure. As illustrated in FIG. 1, the system 10 for vehicle charge includes a vehicle 10a and a server 10b.

In an embodiment, the vehicle 10a and the server 10b may be connected wirelessly or wired. Optionally, the vehicle 10a may establish a communication connection with the server 10b using a communication manner such as WIFI, bluetooth and infrared, or the vehicle 10a may establish a communication connection with the server 10b via a mobile network. A network type of a mobile network may be any one of 2G (GSM), 2.5G (GPRS), 3G (WCDMA, TD-SCDMA, CDMA2000, UTMS), 4G (LTE), 4G + (LTE +) or WiMax, etc.

In an embodiment, an electronic display is provided on the vehicle 10a, a type of the electronic display is not limited in the disclosure, for example, may be a center control screen or a head-up display. The electronic display may display charging demand information of a user, a vehicle state and vehicle charging information. In an embodiment, the vehicle 10a is an electric vehicle (EV), or may be a hybrid vehicle.

In an embodiment, the user inputs a target charging quantity of electricity of the vehicle and a proportional relationship between an estimated charging cost and an estimated charging time through the electronic display of the vehicle 10a. The vehicle 10a sends the target charging quantity of electricity of the vehicle and the proportional relationship between the estimated charging cost and the estimated charging time to the server 10b, and the server 10b determines specific values of the estimated charging cost and the estimated charging time according to the target charging quantity of electricity and the proportional relationship between the estimated charging cost and the estimated charging time, and determines an actual control sequence for performing an actual charging control on the vehicle according to the target charging quantity of electricity, the estimated charging cost and the estimated charging time, and calculates a current actual charging cost in real-time in a charging process.

In an embodiment, the server 10b is configured to determine specific values of the estimated charging cost and the estimated charging time according to the target charging quantity of electricity and the proportional relationship between the estimated charging cost and the estimated charging time, and determines the actual control sequence for performing the actual charging control on the vehicle according to the target charging quantity of electricity, the estimated charging cost and the estimated charging time. In an embodiment, an implementation form of the server 10b is not limited. For example, the server 10b may be a conventional server, a cloud server, a cloud host, a virtual center or other server devices. The server 10b mainly includes a processor, a hard disk, a memory, a system bus, etc., and a general computer architecture type.

In an embodiment, an interface is displayed on the electronic display of the vehicle 10a, and includes two input elements including the target charging quantity of electricity for charging the vehicle and the proportional relationship between the estimated charging cost and the estimated charging time. In response to an operation of the target charging quantity of electricity and the proportional relationship between the estimated charging cost and the estimated charging time, the estimated charging cost and the estimated charging time for charging the vehicle are acquired.

In the above embodiments of the disclosure, there are two information input elements. The vehicle 10a sends the target charging quantity of electricity and the proportional relationship between the estimated charging cost and the estimated charging time to the server 10b in response to the operation of the target charging quantity of electricity and the proportional relationship between the estimated charging cost and the estimated charging time, and the server 10b acquires current driving data of the vehicle; and determines the estimated charging cost and the estimated charging time according to the current driving data, the target charging quantity of electricity and the proportional relationship, and sends the estimated charging cost and the estimated charging time to the vehicle 10a.

In an implementation, the information input elements include a target charging quantity of electricity slider and a time cost associated slider. The vehicle 10a acquires the target charging quantity of electricity in response to a drag operation on the target charging eclectic quantity slider, and acquires the proportional relationship between the estimated charging time and the estimated charging cost in response to a dragging operation on the time cost associated slider.

Further, the information input elements include the target charging quantity of electricity slider and the time cost associated slider. The target charging quantity of electricity slider and the time cost associated slider are arranged up and down or arranged vertically.

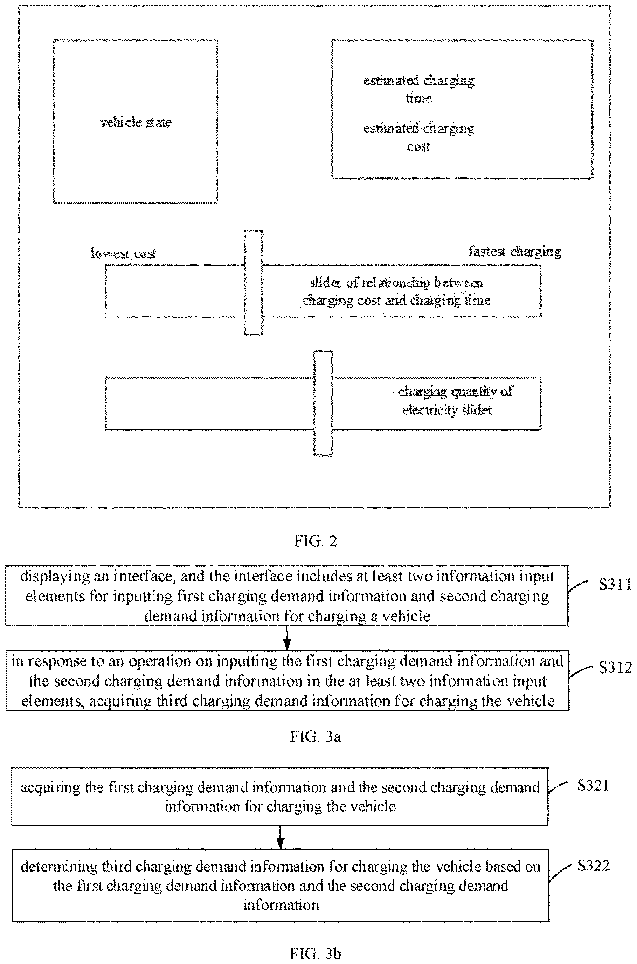

FIG. 2 is a diagram illustrating a charging demand input interface (the above interface) according to example embodiments of the present disclosure. As illustrated in FIG. 2, the charging demand input interface includes a charging quantity of electricity slider and a slider of a relationship between a charging cost and a charging time. The charging demand input interface may further include a time cost display area and a vehicle state display area. An overall layout of the charging demand input interface is not limited in embodiments of the disclosure. In FIG. 2, the charging quantity of electricity slider and the slider of the relationship between the charging cost and charging time may be arranged in a lower area of the interface, and the slider of the relationship between the charging cost and charging time is located above the charging quantity of electricity slider. The vehicle state display area may display a vehicle state of the vehicle in real time, and the time cost display area may display the estimated charging time and the estimated charging cost.

The vehicle 10a displays the estimated charging time and the estimated charging cost on the electronic display after receiving the estimated charging time and the estimated charging cost sent by the server 10b, and the user may check the charging demand information to decide whether to charge the vehicle. In response to a need of charging the vehicle, the vehicle 10a performs a charging operation of the vehicle 10a in response to a charging operation initiated by the user.

It needs to be noted that, implementation forms of the charging quantity of electricity slider and the slider of the relationship between the charging cost and the charging time are not limited in embodiments of the disclosure. The charging quantity of electricity slider may be a slider of adjusting a charging percentage of the vehicle, or may be a slider of adjusting a charging quantity of electricity of the vehicle. A leftmost position of the slider of the relationship between the charging cost and the charging time may be a position corresponding to a lowest charging cost and a longest charging time, and a rightmost position of the slider of the relationship between the charging cost and the charging time may be a position corresponding to a highest charging cost and a shortest charging time. On the contrary, the leftmost position of the slider of the relationship between the charging cost and the charging time may be the position corresponding to the highest charging cost and the shortest charging time, and the rightmost position of the slider of the relationship between the charging cost and the charging time may be the position corresponding to the lowest charging cost and the longest charging time.

In an embodiment, the vehicle 10a sends first charging demand information and second charging demand information to the server 10b after acquiring the first charging demand information and the second charging demand information, and the server 10b acquires the first charging demand information and the second charging demand information for charging the vehicle. The first charging demand information and the second charging demand information are any two pieces of charging demand information of the target charging quantity of electricity, the estimated charging cost and the estimated charging time. The server 10b determines third charging demand information for charging the vehicle according to the first charging demand information and the second charging demand information, and the third charging demand information is remaining charging demand information other than the first demand information and the second demand information in the target charging quantity of electricity, the estimated charging time and the estimated charging cost.

In an alternative embodiment, the first charging demand information is the target charging quantity of electricity, the second charging demand information is the estimated charging time, and the third charging demand information is the estimated charging cost, in which case the server 10b determines the third charging demand information for charging the vehicle according to the first charging demand information and the second charging demand information. In an implementation, a charging current sequence for charging the vehicle is calculated according to the target charging quantity of electricity, the estimated charging time and a power of a charging station. The charging current sequence is a sequence consisting of control signals sent to a battery when the vehicle is charged. A thermal management control sequence for charging the vehicle is calculated according to the charging current sequence. The thermal management control sequence is a sequence consisting of control signals sent to a component related to adjusting a temperature of battery coolant when the vehicle is charged. A battery charging cost is calculated according to the charging current sequence; and an accessory consumption cost is calculated according to the thermal management control sequence; and the estimated charging cost for charging the vehicle is calculated according to the battery charging cost and the accessory consumption cost. The accessory consumption cost includes a consumption cost of at least one of a compressor, a pressure transmitter, a three-way valve, a warm air water pump, an electronic fan, an electromagnetic valve, a battery water pump or a four-way valve.

In the above embodiment, the estimated charging cost for charging the vehicle is calculated according to the battery charging cost and the accessory consumption cost. In an implementation, the estimated charging cost for charging the vehicle is calculated according to the battery charging cost, the accessory consumption cost, a parking cost, an additional electricity cost and a service cost. The additional electricity cost is a fixed electric loss cost required for performing once charging process on the vehicle, and the service cost is a fixed service fee required for performing once charging process on the vehicle. The additional electricity cost is a product of an electric loss cost per unit time and a charging duration. For example, the electric loss cost per one hour is 2 yuan, in which case, charging is performed for 3 hours, and the electric loss cost is 2*3 =6 yuan. The service cost is a fixed value, charging is performed once, and the service cost is fixed to 3 yuan, which is irrelevant to the charging time.

In another alternative embodiment, the first charging demand information is the target charging quantity of electricity, the second charging demand information is the estimated charge cost, and the third charging demand information is the estimated charging time, in which case the server 10b determines the third charging demand information for charging the vehicle according to the first charging demand information and the second charging demand information. In an implementation, a first charging time for charging the vehicle is calculated based on the estimated charging cost and the target charging quantity of electricity; and the estimated charging time for charging the vehicle is determined according to the first charging time, the target charging quantity of electricity and the power of the charging station.

In the above embodiment, the server 10b determines the estimated charging time for charging the vehicle according to the first charging time, the target charging quantity of electricity and the power of the charging station. In an implementation, a first charging cost for charging the vehicle is calculated according to the first charging time, the target charging quantity of electricity and the power of the charging station; and the estimated charging time for charging the vehicle is determined according to a size relationship of a difference value between the first charging cost and the estimated charging cost and a predetermined threshold. In response to the difference value being less than the predetermined threshold, the first charging time is taken as the estimated charging time; in response to the difference value being greater than or equal to the predetermined threshold, predicting the charging cost for charging the vehicle using the pre-estimated charging time, the target charging quantity of electricity and the power of the charging station is circularly executed, until the difference value between the second charging cost and the estimated charging cost is less than the predetermined threshold, and the charging time corresponding to the second charging cost is taken as the estimated charging time.

In the above embodiments, the first charging cost for charging the vehicle is calculated according to the first charging time, the target charging quantity of electricity and the power of the charging station. In an implementation, the charging current sequence for charging the vehicle is calculated according to the target charging quantity of electricity, the first charging time and the power of the charging station. The charging current sequence is a sequence consisting of control signals issued to the battery when the vehicle is charged. The thermal management control sequence for charging the vehicle is calculated according to the charging current sequence, and the thermal management control sequence is the sequence consisting of control signals issued to the component related to adjusting the temperature of the battery coolant when the vehicle is charged. The battery charging cost is calculated according to the charging current sequence; the accessory consumption cost is calculated according to the thermal management control sequence; and the first charging cost for charging the vehicle is calculated according to the battery charging cost and the accessory consumption cost. The accessory consumption cost includes the consumption cost of at least one of the compressor, the pressure transmitter, the three-way valve, the warm air water pump, the electronic fan, the electromagnetic valve, the battery water pump or the four-way valve.

In the above embodiment, the server 10b sends the estimated charging time or the estimated charging cost to the vehicle 10a after calculating and obtaining the estimated charging time or the estimated charging cost, so that the estimated charging time and estimated charging cost may be displayed on the electronic display of the vehicle 10a. The user decides whether to charge the vehicle based on the estimated charging time or the estimated charging cost.

The server 10b determines an actual control sequence for performing an actual charge control on the vehicle according to the first charging demand information and the second charging demand information after taking any two pieces of demand information of the target charging quantity of electricity, the estimated charging cost and the estimated charging time as the first charging demand information and the second charging demand information. The actual control sequence is a sequence consisting of control signals issued to the component related to charging of vehicle when the vehicle is charged.

In the above embodiments, the server 10b obtains the actual control sequence for performing the actual charge control on the vehicle by simulating the charging process of the vehicle according to the first charging demand information and the second charging demand information. In an implementation, a simulation control sequence for performing charging simulation control on the vehicle is obtained by optimizing a control sequence of the vehicle according to the first charging demand information and the second charging demand information, and the actual control sequence for performing the actual charging control on the vehicle is determined according to a simulation result of simulating a charging process of the vehicle according to the simulation control sequence.

The simulation control sequence for performing the charging simulation control on the vehicle is obtained according to the first charging demand information and the second charging demand information. In an implementation, the simulation control sequence for performing the charging simulation control on the vehicle is obtained by taking the first charging demand information and the second charging demand information as objectives using a multi-objective control algorithm.

The actual control sequence for performing the actual charging control on the vehicle is determined according to the simulation result of simulating the charging process of the vehicle according to the simulation control sequence. In an implementation, first simulated charging information is obtained by simulating the charging process of the vehicle using the simulation control sequence. The first simulated charging information is simulated information corresponding to the target charging quantity of electricity, the estimated charging time, and the estimated charging cost. A decision result is generated based on whether the first simulated charging information matches with the first charging demand information and the second charging demand information. The actual control sequence for performing the actual charging control on the vehicle is determined according to the decision result. It needs to be noted that, the first simulated charging information includes a simulated charging time corresponding to the estimated charging time, a simulated charging cost corresponding to the estimated charging cost and a simulated charging quantity of electricity corresponding to the target charging quantity of electricity. With respect to determining whether the first simulated charging information matches the first charging demand information and the second charging demand information, when the first charging demand information and the second charging demand information are the estimated charging time and the target charging quantity of electricity, whether the first simulated charging information matches the first charging demand information and the second charging demand information may be determined based on whether a difference value between the estimated charging time and the simulated charging time is less than a predetermined first threshold and whether a difference value between the target charging quantity of electricity and the simulated charging quantity of electricity is less than a predetermined second threshold. In response to the difference value between the estimated charging time and the simulated charging time being less than the predetermined first threshold and the difference value between the target charging quantity of electricity and the simulated charging quantity of electricity being less than the predetermined second threshold, the first simulated charging information matches the first charging demand information and the second charging demand information. In response to the difference value between the estimated charging time and the simulated charging time being not less than the predetermined first threshold or the difference value between the target charging quantity of electricity and the simulated charging quantity of electricity being not less than the predetermined second threshold, the first simulated charging information does not match the first charging demand information and the second charging demand information. When the first charging demand information and the second charging demand information are the estimated charging time and the target charging quantity of electricity, and when the first charging demand information and the second charging demand information are the estimated charging cost and the estimated charging time, whether the first simulated charging information matches the first charging demand information and the second charging demand information may be determined by analogy according to the above method.

In the above embodiments, in response to the decision result being matching, the simulation control sequence is taken as the actual control sequence for performing the actual charging control on the vehicle. In this case, third charging demand information is determined from the first simulated charging information, and the third charging demand information may be displayed after the user inputs the first charging demand information and the second charging demand information before charging or may be displayed in a charging process.

In the above embodiments, in response to the decision result being not matching, the simulation control sequence is updated and calculated until the target simulation charging information matches the first charging demand information and the second charging demand information, and the target simulation control sequence corresponding to the target simulated charging information is taken as the actual control sequence for performing the actual charging control on the vehicle.

In another implementation, the simulation control sequence is input into a charging demand prediction model, to obtain first simulated charging information. Steps of training the charging demand prediction model are as follow: collecting a control sequence sample and a charging demand information sample; and obtaining the charging demand prediction model by performing model training based on the control sequence sample and the charging demand information sample.

In a process of performing the actual charging control on the vehicle 10a, the vehicle 10a returns actual charging information to the server 10b, and the server optimizes the control sequence again based on the actual charging information, to obtain a new control sequence. In an implementation, the actual charging information returned by the vehicle is received; a third simulation control sequence for performing the charge control on the vehicle is obtained by optimizing a control sequence of the vehicle according to the actual charge information; a new control sequence for performing the actual charge control on the vehicle is obtained by simulating a charging process of the vehicle using the third simulation control sequence; and the new control sequence is sent to the vehicle, so that the vehicle performs the charge control according to the new control sequence.

In an embodiment, in an entire process of charging the vehicle 10a, the server 10b sends a control sequence for performing charging control on the vehicle 10a to the vehicle 10a in real time. The server 10b acquires the thermal management control sequence and the charging current sequence for performing the actual charging control on the vehicle; and the server 10b determines the actual charging cost for charging the vehicle according to the thermal management control sequence and the charging current sequence. The server 10b calculates an actual charging cost at any time point in a charging process in real time.

In the above embodiment, after the server 10b determines the actual charging cost for charging the vehicle according to the thermal management control sequence and the charging current sequence, and then the server 10b sends the actual charging cost to the vehicle 10a, and the vehicle 10a displays the actual charging cost for the user to check the actual charging cost. The actual charging cost may be a charging cost at any time point in the charging process.

In the above embodiments, the server 10b determines the actual charging cost for charging the vehicle according to the thermal management control sequence and the charging current sequence. In an implementation, the server 10b calculates the accessory consumption cost according to the thermal management control sequence; the server 10b acquires an actual charging cost of a battery according to the charging current sequence; and the server 10b determines the actual charging cost for charging the vehicle according to the accessory consumption cost and the actual charging cost of the battery. For example, the server 10b acquires consumption costs of respective components according to the thermal management control sequence to obtain a total accessory consumption cost; and the server 10b calculates the actual charging cost of the battery according to the charging current sequence and the charging time sequence corresponding to each charging current sequence.

In the above embodiment, the server 10b determines the actual charging cost for charging the vehicle according to the accessory consumption cost and the actual charging cost of the battery. In an implementation, the server 10b calculates the actual charging cost for charging the vehicle according to the accessory consumption cost, the actual charging cost of the battery, a parking cost, an additional electricity cost and a service cost. For example, the parking cost is calculated based on a parking unit price and a parking duration; a preset service charge and an additional electricity charge required to pay in once charging process of the vehicle 10a are taken as the service cost and the additional electricity cost.

It needs to be noted that, the accessory consumption cost includes a consumption cost during at least one of the compressor, the pressure transmitter, the three-way valve, the warm air water pump, the electronic fan, the electromagnetic valve, the battery water pump or the four-way valve works according to the thermal management control sequence.

In the above system embodiment of the disclosure, a first position where a first sliding block on the charging quantity of electricity slider is currently located is acquired, a second position where a second sliding block on the slider of the relationship between the charging cost and the charging time is currently located is acquired, the estimated charging time and the estimated charging cost for charging the vehicle are predicted according to the first position and the second position. The user may set the target charging quantity of electricity and the estimated charging time and the estimated charging cost by dragging a position of the sliding block on the charging quantity of electricity slider and a position of the sliding block on the slider of the relationship between the charging cost and the charging time, and the user may balance the charging time and the charging cost for charging the vehicle, which improves user experience.

In the actual charging process of the vehicle 10a, the server 10b determines the actual charging cost for charging the vehicle according to the actual charging control sequence acquired. The actual charging cost may be sent by the server 10b to the vehicle to display in real time in a charging process of the user.

The actual charging sequence includes the thermal management control sequence and the charging current sequence. The actual charging cost for charging the vehicle is determined according to the thermal management control sequence and the charging current sequence. In an implementation, the accessory consumption cost is acquired according to the thermal management control sequence; the actual charging cost of the battery is acquired according to the charging current sequence; and the actual charging cost for charging the vehicle is determined according to the accessory consumption cost and the actual charging cost of the battery. Optionally, the actual charging cost for charging the vehicle is calculated according to the accessory consumption cost, the actual charging cost of the battery, the parking cost, the additional electricity cost and the service cost. The accessory consumption cost includes a quantity of electricity consumption cost during at least one of the compressor, the pressure transmitter, the three-way valve, the warm air water pump, the electronic fan, the electromagnetic valve, the battery water pump or the four-way valve works according to the thermal management control sequence. The additional electricity cost is a fixed electric loss cost required for performing once charging process of the vehicle, and the service cost is a fixed service fee required for performing once charging process of the vehicle. The additional electricity cost is a product of an electric loss cost per unit time and a charging duration. For example, the electric loss cost per one hour is 2 yuan, in which case, charging is performed for 3 hours, and the electric loss cost is 2*3 =6 yuan. The service cost is a fixed value, charging is performed once, and the service cost is fixed to 3 yuan, which is irrelevant to the charging time.

The method for acquiring the actual charging control sequence for performing the actual charging control on the vehicle 10a may refer to descriptions of the above embodiments, which will not be repeated here.

In addition to the system 10 for charging the vehicle, a method for determining charging demand information, a method for vehicle charge control and a method for determining a charging cost of a vehicle are further provided in some embodiments of the disclosure, and the method for determining the charging request information, the method for vehicle charge control and the method for determining the charging cost of the vehicle may be applicable for the system 10 for charging the vehicle, but is not limited to the system 10 for charging the vehicle in the above embodiment.

From a perspective of the vehicle, FIG. 3a is a flowchart illustrating a method for determining charging demand information according to example embodiments of the present disclosure. As illustrated in FIG. 3a, the method includes following steps.

At S311, an interface is displayed, and the interface includes at least two information input elements for inputting first charging demand information and second charging demand information for charging a vehicle, and the first charging demand information and the second charging demand information are any two pieces of charging demand information in a target charging quantity of electricity, an estimated charging time and an estimated charging cost.

At S312, in response to an operation on inputting the first charging demand information and the second charging demand information in the at least two information input elements, third charging demand information for charging the vehicle is acquired. The third charging demand information is remaining charging demand information other than the first demand information and the second demand information in the target charging quantity of electricity, the estimated charging time and the estimated charging cost.

In an embodiment, an electronic display is provided on the vehicle, which is not limited in the disclosure, for example, may be a center control screen or a head-up display. The electronic display may display charging demand information of a user, a vehicle state and vehicle charging information. In an embodiment, the vehicle may be an electric vehicle (EV), or may be a hybrid vehicle.

In an embodiment, the user inputs the first charging demand information and the second charging demand information through the electronic display of the vehicle, the vehicle sends the first charging demand information and the second charging demand information to the server, and the server determines a control sequence for performing actual charging control on the vehicle according to the first charging demand information and the second charging demand information; and calculates a current actual charging cost in real time in a charging process. The first charging demand information and the second charging demand information are any two pieces of charging demand information of the target charging quantity of electricity, the estimated charging time and the estimated charging cost.

In an embodiment, an interface is displayed on the electronic display of the vehicle, and the interface includes at least two information input elements for inputting the first charging demand information and the second charging demand information for charging the vehicle, and the first charging demand information and the second charging demand information are any two pieces of charging demand information in the target charging quantity of electricity, the estimated charging time and the estimated charging cost; in response to the operation of inputting the first charging demand information and the second charging demand information in the at least two information input elements, the third charging demand information for charging the vehicle is acquired. The third charging demand information is remaining charging demand information other than the first demand information and the second demand information in the target charging quantity of electricity, the estimated charging time and the estimated charging cost.

In the above embodiments of the disclosure, there are two information input elements. In response to the operation of inputting the first charging demand information and the second charging demand information in the at least two information input elements, acquiring, by the vehicle, the third charging demand information for charging the vehicle includes: acquiring the first charging demand information in response to an input operation of one of the two information input elements; acquiring the second charging demand information in response to an input operation of the other one of the two information input elements; and determining the third charging demand information for charging the vehicle according to the first charging demand information and the second charging demand information.

In an implementation, the information input elements include a target charging quantity of electricity slider and a time cost associated slider. The vehicle acquires the target charging quantity of electricity in response to a drag operation on the target charging eclectic quantity slider, and acquires the estimated charging time in response to a dragging operation on the time cost associated slider; and determines the estimated charging cost for charging the vehicle based on the target charging quantity of electricity and the target charging time.

Further, the information input elements include the target charging quantity of electricity slider and the time cost associated slider. The target charging quantity of electricity slider and the time cost associated slider are arranged up and down or arranged vertically.

In the above embodiments of the disclosure, there may be three information input elements, which include a target charging quantity of electricity slider, a time slider and a cost slider. In an implementation, in response to slide operations on any two of the target charging quantity of electricity slider, the time slider and the cost slider, any two pieces of demand request information corresponding to the any two sliders are acquired. For example, in response to the slide operations on the target charging quantity of electricity slider and the time slider, the target charging quantity of electricity and the estimated charging time are acquired; for another example, in response to the slide operations on the time slider and the cost slider, the estimated charging time and the estimated charging cost are acquired; for another example, in response to the slide operations on the target charging quantity of electricity slider and the cost slider, the target charging quantity of electricity and the estimated charging cost are acquired.

Correspondingly, after the third charging demand information for charging the vehicle is acquired, a position of a sliding block on a slider corresponding to the third charging demand are automatically adjusted to a position corresponding to the third charging demand information. For example, a slide position on the target charging quantity of electricity is automatically adjusted to a position corresponding to the target charging quantity of electricity.

Further, an arrangement of the target charging quantity of electricity slider, the time slider and the cost slider includes any one of a side-by-side arrangement or a circular arrangement.

In the above embodiments of the disclosure, there may be three information input elements, which include a target charging quantity of electricity input item, a time input item and a cost input item, respectively. In an implementation, in response to information input operations on the target charging quantity of electricity input item, the time input item and the cost input item, any two pieces of charging demand information corresponding to the any two input items are acquired. For example, in response to operations on inputting the quantity of electricity in the target charging quantity of electricity input item and the time in the time input item, the target charging quantity of electricity and the estimated charging time are acquired; for another example, in response to operations on inputting the time in the time input item and the cost in the cost input item, the estimated charging time and the estimated charging cost are acquired; for another example, in response to operations on inputting the target charging quantity of electricity in the target charging quantity of electricity input item and the cost in the cost input item, the target charging quantity of electricity and the estimated charging cost are acquired.

Correspondingly, after the third charging demand information for charging the vehicle is acquired, the third charging demand information is displayed in an information input item corresponding to the third charging demand information. For example, the target charging quantity of electricity is automatically displayed in the target charging quantity of electricity input item.

The vehicle displays the third charging demand information on the electronic display after acquiring the third charging demand information, and the user may check the charging demand information to decide whether to charge the vehicle. In response to a need of charging the vehicle, the vehicle performs a charging operation of the vehicle in response to a charging operation initiated by the user.

It needs to be noted that, implementation forms of the charging quantity of electricity slider and the slider of the relationship between the charging cost and the charging time are not limited in embodiments of the disclosure. The charging quantity of electricity slider may be a slider of adjusting a charging percentage of the vehicle, or may be a slider of adjusting a charging quantity of electricity of the vehicle. A leftmost position of the slider of the relationship between the charging cost and the charging time may be a position corresponding to s lowest charging cost and s longest charging time. A rightmost position of the slider of the relationship between the charging cost and the charging time may be a position corresponding to a highest charging cost and a shortest charging time. On the contrary, the leftmost position of the slider of the relationship between the charging cost and the charging time may be the position corresponding to the highest charging cost and the shortest charging time, and the rightmost position of the slider of the relationship between the charging cost and the charging time may be the position corresponding to the lowest charging cost and the longest charging time.

From a perspective of the server, FIG. 3b is a flowchart illustrating another method for determining charging demand information according to example embodiments of the present disclosure. After any two pieces of demand information of the target charging quantity of electricity, the estimated charging cost and the estimated charging time are taken as the first charging demand information and the second charging demand information, as illustrated in FIG. 3b, the method includes following steps.

At S321, the first charging demand information and the second charging demand information for charging the vehicle are acquired, and the first charging demand information and the second charging demand information are any two pieces of charging demand information in a target charging quantity of electricity, an estimated charging time and an estimated charging cost.

At S322, third charging demand information for charging the vehicle is determined based on the first charging demand information and the second charging demand information. The third charging demand information is remaining charging demand information other than the first demand information and the second demand information in the target charging quantity of electricity, the estimated charging time and the estimated charging cost.

In an embodiment, the server determines a control sequence for performing the actual charging control on the vehicle according to the first charging demand information and the second charging demand information. In an embodiment, an implementation form of the server is not limited. For example, the server may be a conventional server, a cloud server, a cloud host, a virtual center or other server devices. The server mainly includes a processor, a hard disk, a memory, a system bus, etc., and a general computer architecture type.

In an embodiment, the vehicle sends the first charging demand information and the second charging demand information to the server after acquiring the first charging demand information and the second charging demand information. The server acquires the first charging demand information and the second charging demand information for charging the vehicle. The first charging demand information and the second charging demand information are any two pieces of charging demand information of the target charging quantity of electricity, the estimated charging cost and the estimated charging time. The server determines the third charging demand information for charging the vehicle according to the first charging demand information and the second charging demand information, and the third charging demand information is remaining charging demand information other than the first demand information and the second demand information in the target charging quantity of electricity, the estimated charging time and the estimated charging cost.

In an alternative embodiment, the first charging demand information is the target charging quantity of electricity, the second charging demand information is the estimated charging time, and the third charging demand information is the estimated charging cost, in which case the server determines the third charging demand information for charging the vehicle according to the first charging demand information and the second charging demand information. In an implementation, a charging current sequence for charging the vehicle is calculated according to the target charging quantity of electricity, the estimated charging time and a power of a charging station. The charging current sequence is a sequence consisting of control signals sent to a battery when the vehicle is charged. A thermal management control sequence for charging the vehicle is calculated according to the charging current sequence. The thermal management control sequence is a sequence consisting of control signals sent to a component related to adjusting a temperature of battery coolant when the vehicle is charged. A battery charging cost is calculated according to the charging current sequence; and an accessory consumption cost is calculated according to the thermal management control sequence; and an estimated charging cost for charging the vehicle is calculated according to the battery charging cost and the accessory consumption cost. The accessory consumption cost includes a consumption cost of at least one of a compressor, a pressure transmitter, a three-way valve, a warm air water pump, an electronic fan, an electromagnetic valve, a battery water pump or a four-way valve.

In the above embodiment, the estimated charging cost for charging the vehicle is calculated according to the battery charging cost and the accessory consumption cost. In an implementation, the estimated charging cost for charging the vehicle is calculated according to the battery charging cost, the accessory consumption cost, the parking cost, the additional electricity cost and the service cost. The additional electricity cost is a fixed electric loss cost required for performing once charging process on the vehicle, and the service cost is a fixed service fee required for performing once charging process on the vehicle. The additional electricity cost is a product of an electric loss cost per unit time and a charging duration. For example, the electric loss cost per one hour is 2 yuan, in which case, charging is performed for 3 hours, and the electric loss cost is 2*3 =6 yuan. The service cost is a fixed value, charging is performed once, and the service cost is fixed to 3 yuan, which is irrelevant to the charging time.

In another alternative embodiment, the first charging demand information is the target charging quantity of electricity, the second charging demand information is the estimated charge cost, and the third charging demand information is the estimated charging time, in which case the server determines the third charging demand information for charging the vehicle according to the first charging demand information and the second charging demand information. In an implementation, a first charging time for charging the vehicle is calculated based on the estimated charging cost and the target charging quantity of electricity; and the estimated charging time for charging the vehicle is determined according to the first charging time, the target charging quantity of electricity and the power of the charging station.

In the above embodiment, the server determines the estimated charging time for charging the vehicle according to the first charging time, the target charging quantity of electricity and the power of the charging station. In an implementation, a first charging cost for charging the vehicle is calculated according to the first charging time, the target charging quantity of electricity and the power of the charging station; and the estimated charging time for charging the vehicle is determined according to a size relationship of a difference value between the first charging cost and the estimated charging cost and a predetermined threshold. In response to the difference value being less than the predetermined threshold, the first charging time is taken as the estimated charging time; in response to the difference value being greater than or equal to the predetermined threshold, predicting the charging cost for charging the vehicle using the pre-estimated charging time, the target charging quantity of electricity and the power of the charging station is circularly executed, until the difference value between the second charging cost and the estimated charging cost is less than the predetermined threshold, and the charging time corresponding to the second charging cost is taken as the estimated charging time.

In the above embodiments, the first charging cost for charging the vehicle is calculated according to the first charging time, the target charging quantity of electricity and the power of the charging station. In an implementation, the charging current sequence for charging the vehicle is calculated according to the target charging quantity of electricity, the first charging time and the power of the charging station. The charging current sequence is a sequence consisting of control signals issued to the battery when the vehicle is charged. The thermal management control sequence for charging the vehicle is calculated according to the charging current sequence, and the thermal management control sequence is the sequence consisting of control signals issued to the component related to adjusting the temperature of the battery coolant when the vehicle is charged. The battery charging cost is calculated according to the charging current sequence; the accessory consumption cost is calculated according to the thermal management control sequence; and the first charging cost for charging the vehicle is calculated according to the battery charging cost and the accessory consumption cost. The accessory consumption cost includes the consumption cost of at least one of the compressor, the pressure transmitter, the three-way valve, the warm air water pump, the electronic fan, the electromagnetic valve, the battery water pump or the four-way valve.

In the above embodiment, the server sends the estimated charging time or the estimated charging cost to the vehicle after calculating and obtaining the estimated charging time or the estimated charging cost, so that the estimated charging time and estimated charging cost may be displayed on the electronic display of the vehicle. The user decides whether to charge the vehicle based on the estimated charging time or the estimated charging cost.

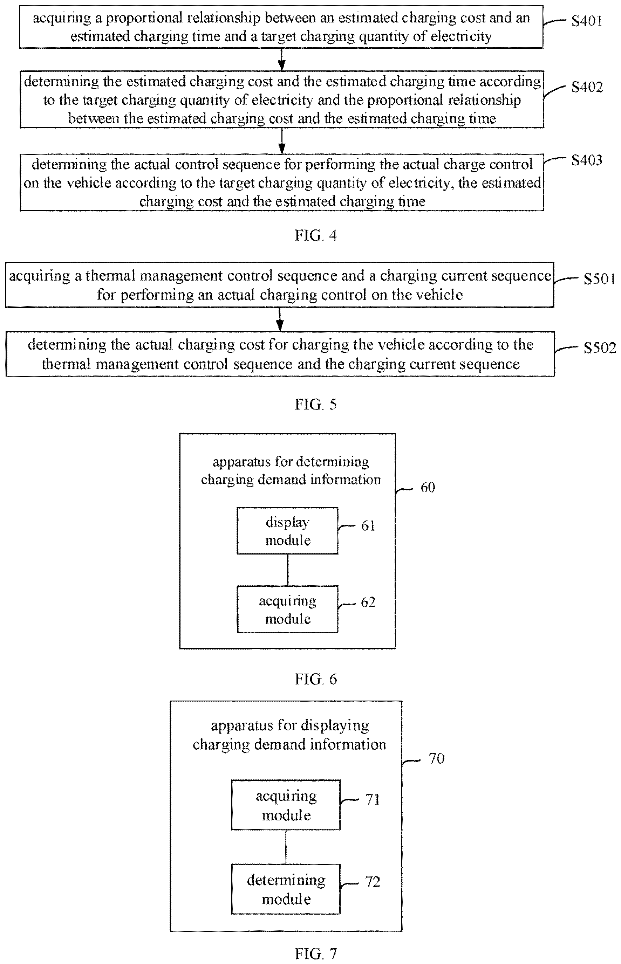

FIG. 4 illustrates a method for vehicle charge control according to embodiments of the present disclosure, and specifically includes following steps S401 to S403.

At S401, a proportional relationship between an estimated charging cost and an estimated charging time and a target charging quantity of electricity are acquired.

At S402, the estimated charging cost and the estimated charging time are determined according to the target charging quantity of electricity and the proportional relationship between the estimated charging cost and the estimated charging time.

At S403, an actual control sequence for performing actual charge control on a vehicle is determined according to the target charging quantity of electricity, the estimated charging cost and the estimated charging time.

In the above embodiment, before the S401 is executed, the method further includes: acquiring a charging quantity of electricity proportion of the vehicle; and determining the target charging quantity of electricity according to the charging quantity of electricity proportion and a remaining quantity of electricity.

In an embodiment, the vehicle 10a acquires the remaining quantity of electricity of the vehicle 10a after acquiring the charging quantity of electricity proportion and the proportional relationship between the estimated charging cost and the estimated charging time both configured by a user on a display, and determines the target charging quantity of electricity according to the remaining quantity of electricity and the charging quantity of electricity proportion. The target charging quantity of electricity is a quantity of electricity required for the vehicle to charge from a current remaining quantity of electricity to a preset charging quantity of electricity proportion. For example, the current remaining quantity of electricity of the vehicle is 20%, the charging quantity of electricity is 90%, and the target charging quantity of electricity is 70%, that is, the target charging quantity of electricity is an quantity of electricity required for charging the vehicle from 20% to 90%; the proportional relationship between the estimated charging cost and the estimated charging time may be determined by the user to slide on the display screen, to obtain a percentage of the charging time and the charging cost. For example, it can be seen from a position of a sliding block in the slider of the charging cost and the charging time shown in FIG. 2 that, if the quantity of electricity is charged to the target charging quantity of electricity, the charging cost required is relatively low, the charging time is relatively long, and the charging time is inversely proportional to the charging cost, that is, the longer the charging time is, the lower the charging cost may be, on the contrary, the higher the charging cost is, the shorter the charging time will be.

In the above embodiments, determining the estimated charging cost and the estimated charging time includes: determining a minimum value of the estimated charging cost according to environmental data of the vehicle and the target charging quantity of electricity; determining the estimated charging cost according to the minimum value of the estimated charging cost and the proportional relationship between the estimated charging cost and the estimated charging time; and determining the estimated charging time according to the estimated charging cost and the target charging quantity of electricity; and/or, determining a minimum value of the estimated charging time according to environmental data of the vehicle and the target charging quantity of electricity; determining the estimated charging time according to the minimum value of the estimated charging time and the proportional relationship between the estimated charging cost and the estimated charging time; and determining the estimated charging cost according to the estimated charging time and the target charging quantity of electricity. It may be understood that the environmental data of the vehicle includes humidity, temperature, etc., a driving situation includes a driving time, a mileage, a charging habit, etc. First, the minimum value of the estimated charging cost and/or the minimum value of the estimated charging time are determined according to current environmental data and the target charging quantity of electricity. After the minimum value is determined, the estimated charging cost and the estimated charging time may be calculated in the following two ways to ensure a proportional relationship between a preset charging cost and a preset charging time and accuracy of both. In a first way, the estimated charging cost is determined according to the minimum value of the estimated charging cost and the proportional relationship between the estimated charging cost and the estimated charging time. For example, the minimum value of the estimated charging cost determined is 100, and may be obtained without considering the charging time. It may be understood that charging is completed at the lowest cost. If the proportional relationship is 20%, a product between the minimum value 100 of the estimated charging cost and the proportional relationship 20% may be calculated, and the minimum value 100 of the estimated charging cost is added to determine that the estimated charging cost is 120; and the estimated charging time is determined according to the estimated charging cost and the target charging quantity of electricity, which refers to the method for calculating the estimated charging time according to the estimated charging cost, and will not be described here, so that the proportional relationship between the estimated charging cost and the estimated charging time may be ensured, relevance of the estimated charging cost and the estimated charging time is increased, and the calculated result is more accurate. In a second way, the estimated charging time is determined according to the minimum value of the estimated charging time and the proportional relationship between the estimated charging cost and the estimated charging time. The minimum value of the estimated charging time may be a minimum value of the charging time obtained without considering the charging cost, and may be understood as the shortest charging time and the greatest charging cost. The minimum value of the estimated charging time may be 50 minutes, and if the proportional relationship is 20%, a product between the proportion 20% and the minimum value 50 of the estimated charging time may be calculated, and the minimum value 50 of the estimated charging time is added to determine that the estimated charging time is 60; the estimated charging cost is determined according to the estimated charging time and the target charging quantity of electricity, which specifically refers to the method for calculating the estimated charging cost according to the estimated charging time, and will not be repeated here.

In the above embodiments, any two pieces of demand information of the target charging quantity of electricity, the estimated charging cost and the estimated charging time are taken as the first charging demand information and the second charging demand information.

The server determines the actual control sequence for performing the actual charge control on the vehicle according to the first charging demand information and the second charging demand information after determining the first charging demand information and the second charging demand information. The actual control sequence is a sequence consisting of control signals issued to a component related to charging of the vehicle when the vehicle is charged.

In the above embodiments, the server obtains the actual control sequence for performing the actual charge control on the vehicle by simulating the charging process of the vehicle according to the first charging demand information and the second charging demand information. In an implementation, a simulation control sequence for performing charging simulation control on the vehicle is obtained according to the first charging demand information and the second charging demand information, and the actual control sequence for performing the actual charging control on the vehicle is determined according to a simulation result of simulating a charging process of the vehicle according to the simulation control sequence.

The control sequence of the vehicle is optimized according to the first charging demand information and the second charging demand information, and the control sequence of the vehicle refers to a sequence consisting of control signals issued by the vehicle to the battery, to obtain the simulation control sequence for performing the charging simulation control on the vehicle. In an implementation, the simulated control sequence for performing the charging simulated control on the vehicle is obtained by taking the first charging demand information and the second charging demand information as objectives using a multi-objective control algorithm.

The actual control sequence for performing the actual charging control on the vehicle is determined according to a simulation result of simulating a charging process of the vehicle according to the simulation control sequence. In an implementation, first simulated charging information is obtained by simulating the charging process of the vehicle using the simulation control sequence. The first simulated charging information is simulated information corresponding to the target charging quantity of electricity, the estimated charging time, and the estimated charging cost. A decision result is generated by matching the first charging demand information and the second charging demand information and corresponding simulated information in the first simulated charging information. The actual control sequence for performing the actual charging control on the vehicle is determined according to the decision result. It needs to be noted that, the first simulated charging information includes a simulated charging time corresponding to the estimated charging time, a simulated charging cost corresponding to the estimated charging cost and a simulated charging quantity of electricity corresponding to the target charging quantity of electricity. With respect to determining whether the first simulated charging information matches the first charging demand information and the second charging demand information, when the first charging demand information and the second charging demand information are the estimated charging time and the target charging quantity of electricity, whether the first simulated charging information matches the first charging demand information and the second charging demand information may be determined based on whether a difference value between the estimated charging time and the simulated charging time is less than a predetermined first threshold and whether a difference value between the target charging quantity of electricity and the simulated charging quantity of electricity is less than a predetermined second threshold. In response to the difference value between the estimated charging time and the simulated charging time being less than the predetermined first threshold and the difference value between the target charging quantity of electricity and the simulated charging quantity of electricity being less than the predetermined second threshold, the first simulated charging information matches the first charging demand information and the second charging demand information. In response to the difference value between the estimated charging time and the simulated charging time being not less than the predetermined first threshold or the difference value between the target charging quantity of electricity and the simulated charging quantity of electricity being not less than the predetermined second threshold, the first simulated charging information does not match the first charging demand information and the second charging demand information. When the first charging demand information and the second charging demand information are the estimated charging time and the target charging quantity of electricity, and when the first charging demand information and the second charging demand information are the estimated charging cost and the estimated charging time, whether the first simulated charging information matches the first charging demand information and the second charging demand information may be determined by analogy according to the above method.

In the above embodiments, in response to the decision result being matching, the simulation control sequence is taken as the actual control sequence for performing the actual charging control on vehicle. In this case, third charging demand information is determined from the first simulated charging information, and the third charging demand information may be displayed after the user inputs the first charging demand information and the second charging demand information before charging or may be displayed in a charging process.

In the above embodiments, in response to the decision result being not matching, the simulation control sequence is updated and calculated until the target simulation charging information matches the first charging demand information and the second charging demand information, and the target simulation control sequence corresponding to the target simulated charging information is taken as the actual control sequence for performing the actual charging control on the vehicle.

In another implementation, the simulation control sequence is input into a charging demand prediction model, to obtain first simulated charging information. Steps of training the charging demand prediction model are as follow: collecting a control sequence sample and a charging demand information sample; and obtaining the charging demand prediction model by performing model training based on the control sequence sample and the charging demand information sample.

In the above embodiments, after the actual control sequence is determined, the actual control sequence may be sent to a component related to charging of the vehicle, to cause the vehicle to perform a charge control according to the actual control sequence; after the actual control sequence is sent to the vehicle, in a process of performing the actual charging control on the vehicle, the vehicle returns actual charging information to the server, and the server optimizes the control sequence again based on the actual charging information, to obtain a new control sequence. In an implementation, the actual charging information returned by the vehicle is received; a third simulation control sequence for performing the charge control on the vehicle is obtained by optimizing a control sequence of the vehicle according to the actual charge information; a new control sequence for performing the actual charge control on the vehicle is obtained by simulating a charging process of the vehicle using the third simulation control sequence; and the new control sequence is sent to the vehicle, so that the vehicle performs the charge control according to the new control sequence. It may be understood that, after the actual control sequence generated is sent to the vehicle, the vehicle controls charging of the battery according to the actual control sequence, and returns an actual charging situation of the vehicle to the server, and the server resimulates according to the actual charging situation to generate a new control sequence, and sends the new control sequence to the vehicle, which is a process of adjusting the charging sequence in real time according to the actual charging situation of the vehicle. Therefore, the vehicle battery may be charged more reasonably, waste of charging resources may be reduced, and the charging time and the charging cost may be further reduced, and the method is more flexible.

FIG. 5 is a structural diagram illustrating a method for determining a vehicle charging cost according to example embodiments of the present disclosure. As illustrated in FIG. 5, the method includes following steps.

At S501, a thermal management control sequence and a charging current sequence for performing an actual charging control on the vehicle are acquired. The thermal management control sequence is a sequence consisting of control signals issued to a component related to adjusting a temperature of battery coolant when the vehicle is charged, and the charging current sequence is a sequence consisting of control signals issued to a battery when the vehicle is charged.

At S502, an actual charging cost for charging the vehicle is determined according to the thermal management control sequence and the charging current sequence.

In an embodiment, in an entire process of charging the vehicle, the server sends a control sequence for performing charging control on the vehicle to the vehicle in real time. The server acquires the thermal management control sequence and the charging current sequence for performing the actual charging control on the vehicle; and the server determines the actual charging cost for charging the vehicle according to the thermal management control sequence and the charging current sequence. The server calculates an actual charging cost at any time point in a charging process in real time.

In the above embodiment, after the server determines the actual charging cost for charging the vehicle according to the thermal management control sequence and the charging current sequence, and then the server sends the actual charging cost to the vehicle, and the vehicle displays the actual charging cost for the user to check the actual charging cost. The actual charging cost may be a charging cost at any time point in a charging process.

In the above embodiments, the server determines the actual charging cost for charging the vehicle according to the thermal management control sequence and the charging current sequence. In an implementation, the server calculates the accessory consumption cost according to the thermal management control sequence; the server acquires an actual charging cost of a battery according to the charging current sequence; and the server determines the actual charging cost for charging the vehicle according to the accessory consumption cost and the actual charging cost of the battery. For example, the server acquires consumption costs of respective components according to the thermal management control sequence to obtain a total accessory consumption cost; and the server calculates the actual charging cost of the battery according to the charging current sequence and the charging time sequence corresponding to each charging current sequence.

In the above embodiments, the server determines the actual charging cost for charging the vehicle according to the accessory consumption cost and the actual charging cost of the battery. In an implementation, the server calculates the actual charging cost for charging the vehicle according to the accessory consumption cost, the actual charging cost of the battery, a parking cost, an additional electricity cost and a service cost. For example, the parking cost is calculated based on a parking unit price and a parking duration; a preset service charge and an additional electricity charge required to pay in once charging process of the vehicle are taken as a service cost and an additional electricity cost.

It needs to be noted that, the accessory consumption cost includes a consumption cost during at least one of a compressor, a pressure transmitter, a three-way valve, a warm air water pump, an electronic fan, an electromagnetic valve, a battery water pump or a four-way valve works according to the thermal management control sequence.

In the above system embodiment of the disclosure, a first position where a first sliding block on the charging quantity of electricity slider is currently located is acquired, a second position where a second sliding block on the slider of the relationship between the charging cost and the charging time is currently located is acquired, the estimated charging time and the estimated charging cost for charging the vehicle are predicted according to the first position and the second position. The user may set the target charging quantity of electricity and the estimated charging time and the estimated charging cost by dragging a position of the sliding block on the charging quantity of electricity slider and a position of the sliding block on the slider of the relationship between the charging cost and the charging time, and the user may balance the charging time and the charging cost for charging the vehicle, which improves user experience.

In the actual charging process of the vehicle, the server determines the actual charging cost for charging the vehicle according to the actual charging control sequence acquired. The actual charging cost may be sent by the server to the vehicle to display in real time for display in a charging process of the user.

The actual charging sequence includes a thermal management control sequence and a charging current sequence. The actual charging cost for charging the vehicle is determined according to the thermal management control sequence and the charging current sequence. In an implementation, the accessory consumption cost is acquired according to the thermal management control sequence; the actual charging cost of the battery is acquired according to the charging current sequence; and the actual charging cost for charging the vehicle is determined according to the accessory consumption cost and the actual charging cost of the battery. Optionally, the actual charging cost for charging the vehicle is calculated according to the accessory consumption cost, the actual charging cost of the battery, the parking cost, the additional electricity cost and the service cost. The accessory consumption cost includes a quantity of electricity consumption cost during at least one of the compressor, the pressure transmitter, the three-way valve, the warm air water pump, the electronic fan, the electromagnetic valve, the battery water pump or the four-way valve works according to the thermal management control sequence. The additional electricity cost is a fixed electric loss cost required for performing once charging process of the vehicle, and the service cost is a fixed service fee required for performing once charging process of the vehicle. The additional electricity cost is a product of an electric loss cost per unit time and a charging duration. For example, the electric loss cost per one hour is 2 yuan, in which case, charging is performed for 3 hours, and the electric loss cost is 2*3 =6 yuan. The service cost is a fixed value, charging is performed once, and the service cost is fixed to 3 yuan, which is irrelevant to the charging time.

FIG. 6 is a structural diagram illustrating an apparatus 60 for determining charging demand information according to example embodiments of the present disclosure. As illustrated in FIG. 6, the apparatus 60 for determining the charging demand information includes a display module 61 and an acquiring module 62.

The display module 61 is configured to display an interface. The interface includes at least two information input elements for inputting first charging demand information and second charging demand information for charging a vehicle, and the first charging demand information and the second charging demand information are any two pieces of charging demand information in a target charging quantity of electricity, an estimated charging time and an estimated charging cost.

The acquiring module 62 is configured to, in response to an operation on inputting the first charging demand information and the second charging demand information in the at least two information input elements, acquire third charging demand information for charging the vehicle.

FIG. 7 is a structural diagram illustrating another apparatus 70 for determining charging demand information according to example embodiments of the present disclosure. As illustrated in FIG. 7, the apparatus 70 for determining the charging demand information includes an acquiring module 71 and a determining module 72.

The acquiring module 71 acquires the first charging demand information and the second charging demand information for charging the vehicle. The first charging demand information and the second charging demand information are any two pieces of charging demand information in a target charging quantity of electricity, an estimated charging time and an estimated charging cost.

The determining module 72 is configured to determine third charging demand information for charging the vehicle based on the first charging demand information and the second charging demand information. The third charging demand information is remaining charging demand information other than the first demand information and the second demand information in the target charging quantity of electricity, the estimated charging time and the estimated charging cost.

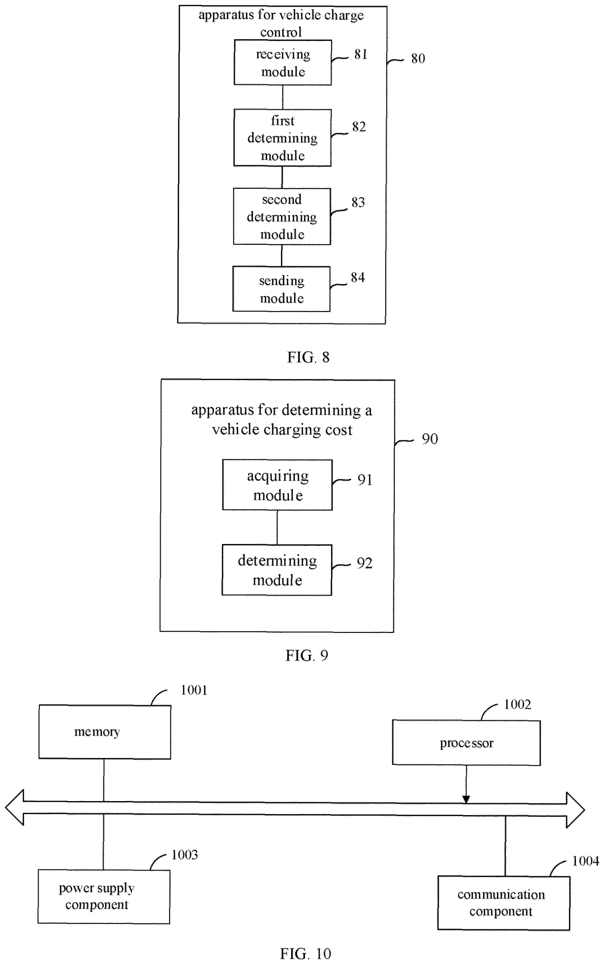

FIG. 8 is a structural diagram illustrating an apparatus 80 for vehicle charge control according to example embodiments of the present disclosure. As illustrated in FIG. 8, the apparatus 80 for vehicle charge control may include a receiving module 81, a first determining module 82, a second determining module 83 and a sending module 84.

The receiving module 81 is configured to acquire a proportional relationship between an estimated charging cost and an estimated charging time and a target charging quantity of electricity.

The first determining module 82 is configured to determine the estimated charging cost and the estimated charging time according to the target charging quantity of electricity and the proportional relationship between the estimated charging cost and the estimated charging time.

The second determining module 83 is configured to determine an actual control sequence for performing actual charge control on a vehicle according to the target charging quantity of electricity, the estimated charging cost and the estimated charging time. The actual control sequence is a sequence consisting of control signals issued to a component related to charging of the vehicle when the vehicle is charged.

The sending module 84 is configured to send the actual control sequence to a component related to charging of the vehicle, to cause the vehicle to perform charge control according to the actual control sequence.

FIG. 9 is a structural diagram illustrating an apparatus 90 for determining a vehicle charging cost according to example embodiments of the present disclosure. As illustrated in FIG. 9, the apparatus 90 for determining the vehicle charging cost includes an acquiring module 91 and a determining module 92.

The acquiring module 91 is configured to acquire a thermal management control sequence and a charging current sequence for performing an actual charging control on the vehicle. The thermal management control sequence is a sequence consisting of control signals issued to a component related to adjusting a temperature of battery coolant when the vehicle is charged, and the charging current sequence is a sequence consisting of control signals issued to a battery when the vehicle is charged.

The determining module 92 is configured to determine an actual charging cost for charging the vehicle according to the thermal management control sequence and the charging current sequence.

FIG. 10 is a diagram illustrating a vehicle according to example embodiments of the present disclosure. As illustrated in FIG. 10, the vehicle includes a vehicle body and a memory 1001 and a processor 1002 on the vehicle body. In addition, the vehicle further includes necessary components such as a power supply component 1003 and a communication component 1004.

The memory 1001 is configured to store other various data and may be configured to support an operation of the electronic device. Examples of the data include instructions of any application or method operated on the electronic device.

The memory 1001 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The communication component 1004 is configured to perform data transmission with other devices.

The processor 1002 may execute computer instructions stored in the memory 1001, and is configured to display an interface; the interface includes at least two information input elements for inputting first charging demand information and second charging demand information for charging a vehicle, and the first charging demand information and the second charging demand information are any two pieces of charging demand information in a target charging quantity of electricity, an estimated charging time and an estimated charging cost; and
in response to an operation on inputting the first charging demand information and the second charging demand information in the at least two information input elements, acquire third charging demand information for charging the vehicle. The third charging demand information is remaining charging demand information other than the first demand information and the second demand information in the target charging quantity of electricity, the estimated charging time and the estimated charging cost.

Correspondingly, a computer-readable storage medium storing a computer program is further provided according to embodiments of the disclosure. When the computer-readable storage medium stores the computer program, and the computer program is executed by one or more processors, the one or more processors are caused to execute steps in method embodiments of FIG. 3a.

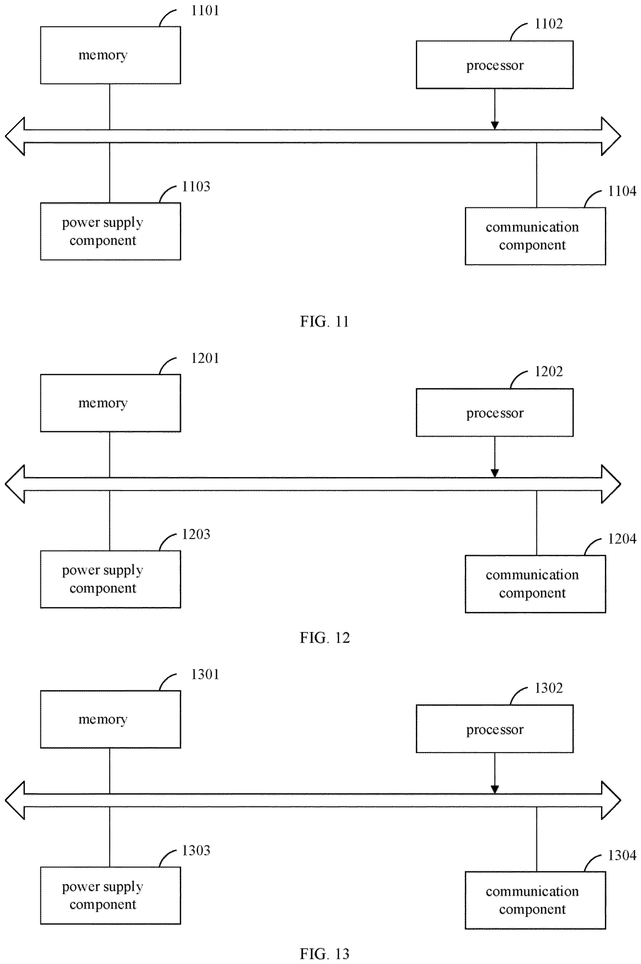

FIG. 11 is a diagram illustrating an electronic device according to example embodiments of the present disclosure. As illustrated in FIG. 11, the electronic device includes a memory 1101 and a processor 1102. In addition, the electronic device further includes necessary components such as a power supply component 1103 and a communication component 1104.

The memory 1101 is configured to store other various data and may be configured to support an operation of the electronic device. Examples of the data include instructions of any application or method operated on the electronic device.

The memory 1101 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The communication component 1104 is configured to perform data transmission with other devices.

The processor 1102 may execute computer instructions stored in the memory 1101, and is configured to acquire first charging demand information and second charging demand information for charging the vehicle. The first charging demand information and the second charging demand information are any two pieces of charging demand information in a target charging quantity of electricity, an estimated charging time and an estimated charging cost.

Third charging demand information for charging the vehicle is determined based on the first charging demand information and the second charging demand information. The third charging demand information is remaining charging demand information other than the first demand information and the second demand information in the target charging quantity of electricity, the estimated charging time and the estimated charging cost.

Correspondingly, a computer-readable storage medium storing a computer program is further provided according to embodiments of the disclosure. When the computer-readable storage medium stores the computer program, and the computer program is executed by one or more processors, the one or more processors are caused to execute steps in method embodiments of FIG. 3b.

FIG. 12 is a diagram illustrating another electronic device according to example embodiments of the present disclosure. As illustrated in FIG. 12, the electronic device includes a memory 1201 and a processor 1202. In addition, the electronic device further includes necessary components such as a power supply component 1203 and a communication component 1204.

The memory 1201 is configured to store other various data and may be configured to support an operation of the electronic device. Examples of the data include instructions of any application or method operated on the electronic device.

The memory 1201 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The communication component 1204 is configured to perform data transmission with other devices.

The processor 1202 may execute computer instructions stored in the memory 1201, and is configured to: receive first charging demand information and second charging demand information of the vehicle; the first charging demand information and the second charging demand information are any two pieces of charging demand information in a target charging quantity of electricity, an estimated charging time and an estimated charging cost;
determine an actual control sequence for performing an actual charge control on the vehicle according to the first charging demand information and the second charging demand information; the actual control sequence is a sequence consisting of control signals issued to a component related to charging of vehicle when the vehicle is charged; and
send the actual control sequence to the vehicle for the vehicle to perform a charge control according to the actual control sequence.

Correspondingly, a computer-readable storage medium storing a computer program is further provided according to embodiments of the disclosure. When the computer-readable storage medium stores the computer program, and the computer program is executed by one or more processors, the one or more processors are caused to execute steps in method embodiments of FIG. 5.

FIG. 13 is a diagram illustrating an electronic device according to example embodiments of the present disclosure. As illustrated in FIG. 13, the electronic device includes a memory 1301 and a processor 1302. In addition, the electronic device further includes necessary components such as a power supply component 1303 and a communication component 1304.

The memory 1301 is configured to store other various data and may be configured to support an operation of the electronic device. Examples of the data include instructions of any application or method operated on the electronic device.

The memory 1301 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The communication component 1304 is configured to perform data transmission with other devices.

The processor 1302 may execute computer instructions stored in the memory 1301, and is configured to acquire a thermal management control sequence and a charging current sequence for performing an actual charging control on the vehicle; the thermal management control sequence is a sequence consisting of control signals issued to a component related to adjusting a temperature of battery coolant when the vehicle is charged, and the charging current sequence is a sequence consisting of control signals issued to a battery when the vehicle is charged; and
determine the actual charging cost for charging the vehicle according to the thermal management control sequence and the charging current sequence.

Correspondingly, a computer-readable storage medium storing a computer program is further provided according to embodiments of the disclosure. When the computer-readable storage medium stores the computer program, and the computer program is executed by one or more processors, the one or more processors are caused to execute steps in method embodiments of FIG. 5.

The communication components in FIGS. 10 to 13 may be configured for convenience of wired or wireless communication between a device where the communication component is located and other devices. The device where the communication component is located may access wireless networks based on communication standards, such as WiFi, 2G, 3G, 4G/LTE, 5G and other mobile communication networks, or their combination. In an example embodiment, the communication component receives broadcast signals or broadcast-related information from an external broadcast management system via a broadcast channel. In an example embodiment, the communication component further includes a near field communication (NFC) module to facilitate short-range communication. For example, the NFC module may be implemented based on a radio frequency identification (RFID) technology, an infrared data association (IRDA) technology, an ultra-wideband (UWB) technology, bluetooth (BT) technology and other technologies.

The power supply components as illustrated in FIGS. 10 to 13 may provide power supply for various components of the device where the power supply component is located. The power supply component may include a power supply management system, one or more power supplies, and other units related to generating, managing and distributing power for the device where the power supply component is located.

The electronic component may further include a display and an audio component.

The display includes a screen, and the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense a boundary of a touch or slide action, but also detect a duration and pressure related to the touch or slide operation.

The audio component may be configured to output and/or input an audio signal. For example, the audio component includes a microphone (MIC). When the audio component may be in an operation mode, such as call mode, record mode, and speech recognition mode, the MIC is configured to receive an external audio signal. The audio signal received may be further stored in the memory or sent via the communication component. In some embodiments, the audio component further includes a speaker configured to output an audio signal.

A vehicle is further provided according to embodiments of the disclosure, and the vehicle includes the apparatus for vehicle charge control.

Those skilled in the art shall understand that embodiments in the present disclosure may be provided as methods, systems, or computer program products. Therefore, the present disclosure may adopt the form of a full hardware embodiment, a full software embodiment, or an embodiment combining a software and a hardware. Further, the present disclosure may adopt a form of a computer program product implemented on one or more computer usable storage media (including but not limited to a disk memory, a CD-ROM and an optical memory) including a computer usable program code.

The present disclosure is described with reference to flowcharts and/or block diagrams of methods, devices (systems), and computer program products according to embodiments of the present disclosure. It should be understood that each process and/or block in the flowchart and/or the block diagram, and a combination of the process and/or the box in the flowchart and/or the block diagram, may be implemented by computer program instructions. The computer program instructions may be provided to a processor of a general-purpose computer, a dedicated computer, an embedded processor, or other programmable data processing devices to produce a machine such that instructions executed by the processor of the computer or other programmable data processing devices may produce an apparatus for implementing functions specified in one or more processes of the flowchart and/or in one or more boxes of the block diagram.

The computer program instructions may be further stored in a computer-readable memory capable of guiding the computer or the other programmable data processing devices to operate in a particular manner such that the instructions stored in the computer-readable memory produce an article of manufacture including an instruction apparatus that implements the function specified in one or more processes of the flowchart and/or in one or more boxes of the block diagram.

The computer program instructions may be loaded onto a computer or other programmable data processing devices such that a series of operation steps are performed on the computer or the other programmable devices to produce processings implemented by the computer such that the instructions executed on the computer or the other programmable devices provide steps of functions specified in one or more processes of the flowchart and/or in one or more boxes of the block diagram.

In a typical configuration, a computing device includes one or more processors (CPUs), an input/output (I/O) interface, a network interface and a memory.

The memory may include a volatile memory, a random access memory (RAM) and/or a nonvolatile memory in computer-readable media, such as a read-only memory (ROM) or a flash RAM. The memory is an example of the computer-readable media.

The computer-readable media, including non-volatile and volatile, removable and non-removable media, may implement information storage by any method or technology. The information may be computer-readable instructions, data structures, modules of a program, or other data. Examples of storage media for a computer include, but are not limited to, a phase change memory (PRAM), a static random access memory (SRAM), a dynamic random access memory (DRAM), other type of random access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassettes, magnetic tape magnetic disk storages or other magnetic storage devices, or any other non-transmission medium, which may be used to store information that can be accessed by the computing device. Computer-readable media, as defined herein, do not include transitory media, such as modulated data signals and carriers.

It should be noted that relational terms such as "first" and "second" are used herein to distinguish one entity or operation from another entity or operation without necessarily requiring or implying any such actual relationship or order between such entities or operations. And, the terms "comprise", "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The foregoing is merely an implementation of the present disclosure, so that those skilled in the art may understand or implement the present disclosure. Various modifications to the embodiments will be apparent to those skilled in the art, and general principles defined herein may be implemented in other embodiments without departing from the spirit or scope of the disclosure. Therefore, the present disclosure may not be limited to the embodiments described herein, but conform to the widest scope consistent with principles and novel features disclosed herein.

## Claims

1. A method for vehicle charge control, comprising:
acquiring a proportional relationship between an estimated charging cost and an estimated charging time and a target charging quantity of electricity;
determining the estimated charging cost and the estimated charging time according to the target charging quantity of electricity and the proportional relationship between the estimated charging cost and the estimated charging time; and
determining an actual control sequence for performing an actual charge control on the vehicle according to the target charging quantity of electricity, the estimated charging cost and the estimated charging time, wherein the actual control sequence is a sequence consisting of control signals issued to a component related to charging of the vehicle when the vehicle is charged.

2. The method according to claim 1, further comprising:
acquiring a charging quantity of electricity proportion of the vehicle; and
determining the target charging quantity of electricity according to the charging quantity of electricity proportion and a remaining quantity of electricity of the vehicle.

3. The method according to claim 1 or 2, wherein determining the estimated charging cost and the estimated charging time according to the target charging quantity of electricity and the proportional relationship between the estimated charging cost and the estimated charging time comprises:
determining a minimum value of the estimated charging cost according to environmental data of the vehicle and the target charging quantity of electricity; determining the estimated charging cost according to the minimum value of the estimated charging cost and the proportional relationship between the estimated charging cost and the estimated charging time; and determining the estimated charging time according to the estimated charging cost and the target charging quantity of electricity; and/or,
determining a minimum value of the estimated charging time according to environmental data of the vehicle and the target charging quantity of electricity; determining the estimated charging time according to the minimum value of the estimated charging time and the proportional relationship between the estimated charging cost and the estimated charging time; and determining the estimated charging cost according to the estimated charging time and the target charging quantity of electricity.

4. The method according to claim 3, wherein determining the estimated charging cost according to the estimated charging time and the target charging quantity of electricity comprises:
calculating a charging current sequence for charging the vehicle according to the target charging quantity of electricity, the estimated charging time and a power of a charging station, wherein the charging current sequence is a sequence consisting of control signals issued to a battery when the vehicle is charged;
calculating a thermal management control sequence for charging the vehicle according to the charging current sequence, wherein the thermal management control sequence is a sequence consisting of control signals issued to a component related to adjusting a temperature of battery coolant when the vehicle is charged;
calculating a battery charging cost according to the charging current sequence;
calculating an accessory consumption cost according to the thermal management control sequence; and
calculating the estimated charging cost for charging the vehicle according to the battery charging cost and the accessory consumption cost.

5. The method according to claim 3, wherein determining the estimated charging time according to the estimated charging cost and the target charging quantity of electricity comprises:
calculating a first charging time for charging the vehicle according to the estimated charging cost and the target charging quantity of electricity;
calculating a first charging cost for charging the vehicle according to the first charging time, the target charging quantity of electricity and a power of a charging station; and
determining the estimated charging time for charging the vehicle according to a size relationship of a difference value between the first charging cost and the estimated charging cost and a predetermined threshold.

6. The method according to claim 1, wherein determining the actual control sequence for performing the actual charge control on the vehicle according to the target charging quantity of electricity, the estimated charging cost and the estimated charging time comprises:
taking any two pieces of demand information of the target charging quantity of electricity, the estimated charging cost and the estimated charging time as first charging demand information and second charging demand information;
obtaining a simulation control sequence for performing a charging simulation control on the vehicle according to the first charging demand information and the second charging demand information; and
determining the actual control sequence for performing the actual charging control on the vehicle according to a simulation result of simulating a charging process of the vehicle according to the simulation control sequence.

7. The method according to claim 6, wherein obtaining the simulation control sequence for performing the charging simulation control on the vehicle according to the first charging demand information and the second charging demand information comprises:
obtaining the simulation control sequence for performing the charging simulation control on the vehicle by taking the first charging demand information and the second charging demand information as objectives using a multi-objective control algorithm.

8. The method according to claim 6 or 7, wherein determining the actual control sequence for performing the actual charging control on the vehicle according to the simulation result of simulating the charging process of the vehicle according to the simulation control sequence comprises:
obtaining first simulated charging information by simulating the charging process of the vehicle using the simulation control sequence, wherein the first simulated charging information is simulated information corresponding to the target charging quantity of electricity, the estimated charging time, and the estimated charging cost;
generating a decision result by matching the first charging demand information and the second charging demand information with the corresponding simulated information in the first simulated charging information; and
determining the actual control sequence for performing the actual charging control on the vehicle according to the decision result.

9. The method according to claim 8, wherein determining the actual control sequence for performing the actual charging control on the vehicle according to the decision result comprises:
in response to the decision result being matching, taking the simulation control sequence as the actual control sequence for performing the actual charging control on the vehicle; and
in response to the decision result being not matching, updating and calculating the simulation control sequence until a target simulation control sequence matches the first charging demand information and the second charging demand information, and taking the target simulation control sequence as the actual control sequence for performing the actual charging control on the vehicle.

10. The method according to any one of claims 1 to 9, further comprising:
sending the actual control sequence to a component related to charging of the vehicle, to cause the vehicle to perform a charge control according to the actual control sequence;
receiving actual charging information returned by the vehicle;
obtaining a third simulation control sequence for performing the charge control on the vehicle by optimizing a control sequence of the vehicle according to the actual charging information;
obtaining a new control sequence for performing the actual charge control on the vehicle by simulating a charging process of the vehicle using the third simulation control sequence; and
sending the new control sequence to the vehicle, to cause the vehicle to perform the charge control according to the new control sequence.

11. An apparatus for vehicle charge control, comprising:
a receiving module, configured to acquire a proportional relationship between an estimated charging cost and an estimated charging time and a target charging quantity of electricity;
a first determining module, configured to determine the estimated charging cost and the estimated charging time according to the target charging quantity of electricity and the proportional relationship between the estimated charging cost and the estimated charging time; and
a second determining module, configured to determine an actual control sequence for performing an actual charge control on the vehicle according to the target charging quantity of electricity, the estimated charging cost and the estimated charging time, wherein the actual control sequence is a sequence consisting of control signals issued to a component related to charging of the vehicle when the vehicle is charged.

12. An electronic device, comprising:
a memory;
a processor; and
a computer program stored in the memory;
wherein the computer program is executed by the processor to implement the method according to any one of claims 1 to 10.

13. A computer-readable storage medium with a computer program stored thereon, wherein when the computer program is executed by a processor, steps of the method according to any one of claims 1 to 10 are implemented.

14. A vehicle, comprising the apparatus for vehicle charge control according to claim 11.
